# EUROPEAN PATENT APPLICATION

(11) **EP 2 653 800 A2**
(43) Date of publication of application: **23.10.2013**
(21) Application number: 13162832.3
(22) Date of filing: 09.04.2013
(51) Int. Cl.: F24J 2/04, F24J 2/52

(54) **Method and arrangement for installing energy exchange unit to roof and energy exchange element**

(30) Priority: 19.04.2012 FI 20125426
(71) Applicant: Rautaruukki Oyj, 00810 Helsinki (FI)
(72) Inventor: Eerola, Harri, 00810 Helsinki (FI); Kari Petteri, Lautso, 00810 Helsinki (FI)
(74) Representative: Kolster Oy Ab

(57) **Abstract**

The invention relates to a method and arrangement for installing an energy exchange unit (4) to a roof (2) of a building (1), and to an energy exchange element (3). In the arrangement the energy exchange unit (4) is supported on the roof trusses (10) in the installation area (5) such that bottom surface (31) of the energy exchange unit (4) is positioned between upper surface of the roof trusses (10) of the roof (2) and bottom surface of the battens (12) of the roof (2).

## Description

### FIELD OF THE INVENTION

The present invention relates to a method for installing an energy exchange unit to a roof of a building and more particularly to a method according to the preamble of claim 1. The present invention further relates to an arrangement for installing an energy exchange unit to a roof of a building and more particularly to an arrangement according to the preamble of claim 8.

### BACKGROUND OF THE INVENTION

Energy exchange units and elements, such as solar heat collectors, are installed to roofs of buildings for utilizing solar energy or thermal energy of the ambient atmosphere. Conventionally energy exchange units are installed on top of the roof covering such as on steel roofing elements or on roof tiles. Utilizing these kinds of external energy exchange units is problematic as they require forming lead-throughs to be made to the roof covering for fluid pipes or electrical connections. Furthermore, these kind of non-integrated solutions protrude significantly from the roofing covering surface which is sometimes unacceptable for architectural reasons. To overcome these disadvantages integrated energy exchange units are provided to roofs of buildings. Integrated energy exchange units are at least partly built-in to the roof structure such that the energy exchange unit forms the roof covering in the location where it is installed. Integrating of the energy exchange units is conventionally carried out by replacing the roof covering with the energy exchange unit or in addition to replacing the roof covering, also removing at least part of the support structure including the possible roofing underlay of the roof under the roof covering and installing the energy exchange unit to this space.

The prior art methods and arrangements for integrating an energy exchange unit to a roof of a building have the disadvantage that they require removing major parts of the support structure of the roof, and also the roofing underlay. Usually this means that both the battens, roof trusses and roofing underlay are removed or at least modified in integrating the energy exchange unit such that it is located substantially on the same level as the roof covering. However, this weakens the loadbearing capacity of the roof and is also a complicated task to perform. This is problematic because the when the energy exchange unit forms the roof covering in the location where it is installed, the roof must carry loads, such as snow load 240kg/m² required in some Nordic countries, which is required also on the installation area.

In other known solutions, the energy exchange units protrude still significantly from the roofing covering surface.

Alternative prior art arrangements comprise providing the energy exchange unit with grooves or recesses which may receive roof trusses such that the energy exchange unit may be positioned at a lower level in the roof. These grooves or recesses are made to the insulating material at the bottom of the energy exchange element and thus the energy efficiency of the energy exchange unit is compromised. Furthermore, the grooves or recesses define and restrict the installation location of the energy exchange element together with the support structure of the roof such that the location of the energy exchange unit may not be chosen freely. Thus, this kind of approach requires energy exchange units that are designed and dimensioned to certain spacing between the roofing trusses i.e. standard dimensioned energy exchange unit cannot be used. This is especially troublesome when the integration is done to existing roof having unforeseeable spacing, usually 900 to 1200 mm, between the roofing trusses.

### BRIEF DESCRIPTION OF THE INVENTION

An object of the present invention is therefore to provide a method, an arrangement and an energy exchange element as to overcome or at least alleviate the above mentioned problems. The objects of the invention are achieved by a method according to the characterizing portion of claim 1. The objects of the present invention are further achieved by an arrangement according to the characterizing portion of claim 8. The preferred embodiments of the invention are disclosed in the dependent claims.

The invention is based on the idea of integrating an energy exchange element to a roof of a building such that such that the energy exchange unit forms the roof covering in the installation area in the manner described below. The roof comprises a roof covering and a support structure comprising two or more adjacent roof trusses and upper roof supports extending between at least two adjacent roof trusses, such as battens, provided on the roof trusses. An installation area is provided to the roof for the receiving the energy exchange unit. The installation area is provided by removing or leaving out roof covering and upper roof supports from the installation area. Constructing new roof the installation area may be left without roof covering and possibly also without the upper roof supports. An energy exchange unit having a top surface and a bottom surface is integrated to the roof in the installation area such that the energy exchange unit forms locally the roof covering in the installation area. According to the present invention the energy exchange unit is supported on the roof trusses in the installation area such that the bottom surface of the energy exchange unit is positioned in substantially perpendicular direction to the roof surface on height below upper surface of the upper roof supports but on or upper side of the upper surface of the roof trusses of the roof or such that bottom surface of the energy exchange unit is positioned in substantially perpendicular direction to the roof surface on height between upper surface of the roof trusses of the roof and bottom surface of the upper roof supports of the roof. In a preferred embodiment the energy exchange unit is supported and attached on the roof trusses by one or more elongated load-bearing support elements, such as load-bearing metal profiles, extending substantially in transversal direction to the roof trusses and attached to the roof trusses for supporting and attaching the energy exchange unit to the roof structure. In one embodiment the load-bearing support elements are made of steel and they have cross sectional Z-profile or L-profile. The load-bearing support elements may be provided to the upper and lower end for supporting and attaching the upper and lower edge of the energy exchange unit to the roof trusses and providing load bearing capacity in the longitudinal direction of the battens for the energy exchange unit in the installation area. The energy exchange unit or the energy exchange elements are preferably provided with self-supporting structure or made self-supporting. The energy exchange unit may comprise two or more energy exchange elements joined together with a waterproof joint such that the bottom surfaces of the adjacent energy exchange elements is provided with substantially uniform planar bottom surface for the energy exchange unit. The waterproof joint between adjacent energy exchange elements and the substantially planar uniform bottom surface of the energy exchange unit make it possible to integrate the energy exchange unit to an installation area according to the present invention.

The present invention provides a method and arrangement for integrating an energy exchange unit to a roof of a building on substantially same level as the roof covering without making major changes to the support structure of the roof which would weaken the load-bearing capacity of the roof. Furthermore, the present invention enables the installation location of the energy exchange element to be freely chosen independently of the roof trusses or other support element of the support structure of the roof. This way the solution is well suitable for new roofs as well as for existing roofs. Also in this way the waterproof element joints of the adjacent energy exchange element and the waterproof side joints of heat exchange unit may be aligned with possible standing seams of the roof to achieve well integrated finish.

### BRIEF DESCRIPTION OF THE DRAWINGS

In the following the invention will be described in greater detail by means of preferred embodiments with reference to the accompanying drawings, in which
figure 1 shows a building having an energy exchange unit integrated to the roof;
figure 2 shows schematically one embodiment of an installation area formed to a roof of a building for receiving an energy exchange unit;
figure 3 shows schematically an energy exchange unit installed to the installation area of figure 2;
figure 4 shows a front view of the installation arrangement of the energy exchange unit to the roof according to figure 2;
figure 5 shows a side view of the installation arrangement of the energy exchange unit to the roof according to figure 2;
figure 6 shows a front end view of one embodiment of an energy exchange element according to the present invention;
figure 7 shows a side joint arrangement of the energy exchange element of figure 6 to roof covering;
figure 8 shows element joint between adjacent energy exchange elements along the side edges of the energy exchange elements of figure 6;
figure 9 shows an upper support arrangement for supporting upper edge of the energy exchange unit to the roof structure; and
figure 10 shows a lower support arrangement for supporting lower edge of the energy exchange unit to the roof structure.

### DETAILED DESCRIPTION OF THE INVENTION

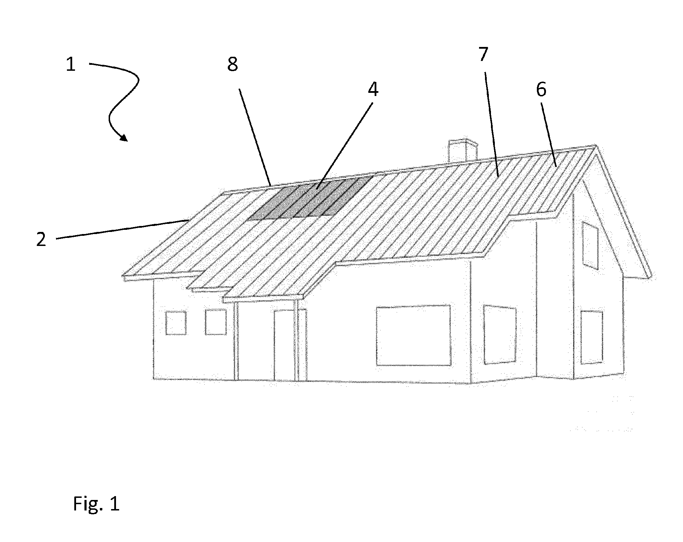

Figure 1 is a building 1 with a ridge roof 2 having a ridge 8. The roof 2 comprises a roof covering 6 having standing seams 7 projecting from the planar surface of the roof covering 6 and extending in the transversal direction in relation to the ridge 8. The roof covering 6 is preferably made of steel sheet elements. However, it should be understood that the present invention is not restricted to any particular type of roof covering or roof type. The roof 2 may be a flat roof, single pitch roof or any other type of roof. Furthermore the roof covering may be provided by roof tiles, shaped steel roof elements or any other material. The roof 2 is further provided with an energy exchange unit 4 integrated to the roof 2 such that the energy exchange unit 4 forms locally the roof covering. The integration of the energy exchange unit 4 means that the energy exchange unit 4 is at least partly built-in to the roof 2 such that the upper surface energy exchange unit 4 is substantially on the same level as the surface of the roof covering 6 or very close to the level of the surface of the roof covering 6.

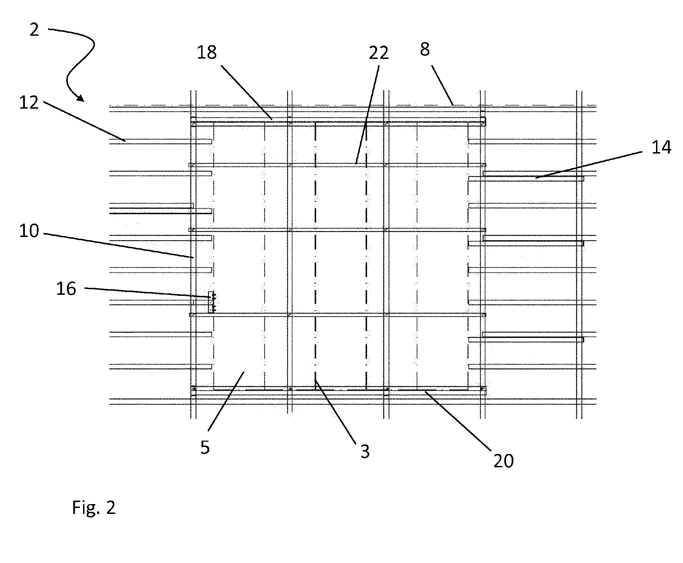

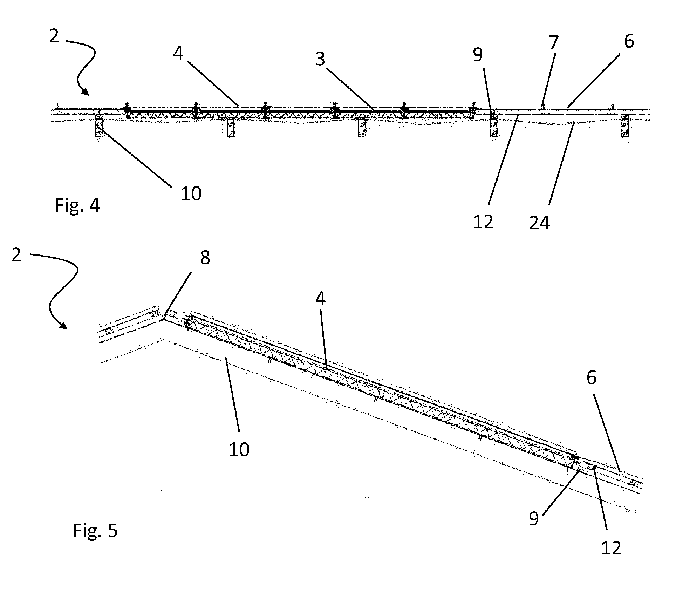

The roof 2 comprises further a support structure under the roof covering for providing load-bearing capacity for the roof 2. Figure 2 shows schematically the support structure of the roof 2 from above. The support structure comprises roof trusses 10 extending in a first direction at predetermined distance from each other. The roof is provided with two or more adjacent roof trusses. In this embodiment the roof trusses extend transversely or perpendicularly to the ridge 8 of the roof 2. The support structure further comprises battens 12 provided on the upper surface of the roof trusses 10 or on ventilation strips 9 and attached thereto. The battens 12 extend in transversal direction in relation to the roof trusses 10 and in this embodiment substantially perpendicularly to the direction of the roof trusses 10 and in parallel direction to the ridge 8. In the embodiments shown in this context the battens 12 are shown as elongated strips, but in alternative embodiment the battens 12 may also be replaced by sheets, plates or the like, for example wooden sheets. Therefore the battens 12 and the sheets may be used to form upper roof support supported on the roof trusses. In the following description embodiments shown comprise elongated battens 12 as upper roof supports, but the battens in the shown embodiments and in the present invention may be replaced by any kind of upper roof supports, for example wooden sheets. Figure 4 shows further a front view of the support structure of the roof 2. The roof trusses 10 are provided with ventilation strips 9 attached to the roof trusses 10 and extending on and along the upper surface thereof. The battens 12 or the upper roof supports are arranged and attached to the ventilation strips 9, as shown in figure 4. A roofing underlay 24 is arranged and spread under the roof covering 6. The roofing underlay 24 is attached to the roof trusses 10 and provided to pass between the roof trusses 10 and the ventilation strips 9. It should be noted that the support structure described above and shown in figures is one example and the roofing underlay 24 and the ventilation strips 9 may also be omitted. The upper roof supports 12, battens or sheets or plates extend between at least two adjacent roof trusses 10. Thus the upper roof supports 12 are attached or connected to adjacent roof trusses 10. The upper roof supports 12 form and define the roof surface and provide an attachment base for roof covering.

According to the present invention the energy exchange unit 4 is installed to the roof 2 such that an installation area 5 is formed to the roof 2 for receiving the energy exchange unit 4. The energy exchange unit 4 is installed to the installation area 5 of the roof 2 such that the top surface 30 of the energy exchange unit 4 forms roof covering in the installation area 5. Figure 2 shows the installation area 5 formed to the roof 2. The forming of the installation area 5 comprises removing or leaving out battens 12 or upper roof supports from the installation area 5. As shown in figure 2 the battens 12 or upper roof supports are cut and removed from the installation area 5. In an alternative embodiment in which the installation area 5 is provided to a new roof, the installation area 5 may be left without the battens 12 or upper roof supports. The forming of the installation area 5 may further comprise removing from the installation area 5 ventilation strips 9 extending on and along the upper surface of the roof trusses 10. In a new roof the installation area 5 may be left without ventilation strips 9 during construction. However the roof trusses 10 and the roofing underlay 24 are not removed or altered in any way. It should be understood that in this embodiment according of the present invention and according to the present invention, the installation area 5 and the energy exchange unit 4 are provided such that there is no need for removing or altering the roof trusses 10 and the roofing underlay 24. When the installation area 5 is formed to an existing roof 2 the forming of the installation area 5 may also comprise removing the roof covering 6 from the installation area 5. It should be also noted that, when building a new roof structure, the invention is also possible to accomplish without removing any existing items during the installation, but only leaving out the above mentioned structural parts from the installation area 5.

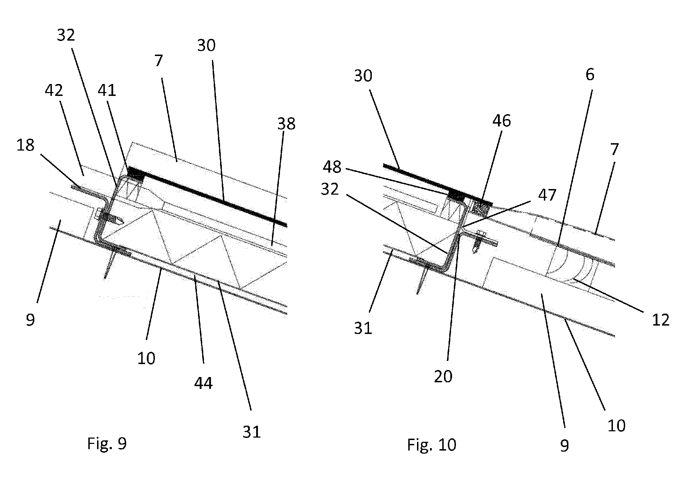

After removing or leaving out the necessary support structure parts from the installation area 5, the installation area 5 may be provided with one or more elongated load-bearing support elements 18, 20 extending substantially in the direction of the battens 12 or transversal direction to the roof trusses 10 for supporting and attaching the energy exchange unit 4 to the roof structure. The load-bearing support elements 18, 20 may be made of steel and have cross sectional Z-prolife or L-profile. The Z-profile is preferable as it has a suitable bending stiffness property for this purpose. In the embodiment of figure 2 one or more upper load-bearing support elements 18 is mounted to upper end of the installation area 5 and one or more lower load-bearing support elements 20 is mounted to lower end of the installation area 5. The load-bearing support elements 18, 20 may be attached to the roof trusses 10 with screws, bolts or the like attachment means. The attachment of the energy exchange unit 4 to the load-bearing support elements as described above is shown in figures 9 and 10. The upper end of the installation area may be located close to the ridge 8 so that it can be covered by roof valley (not shown in figs) on the ridge 8.

The installation area 5 may be further provided with one or more elongated attachment bands 22 extending substantially in the direction of the battens 12 or transversal direction to the roof trusses 10 and attached to the roof trusses 10 for securing the roof trusses 10 to each other in the installation area 5. The attachment bands 22 may be made from flexible steel or metal bands and attached to the roof trusses 10 with screw, nails or the like. Preferable attachment bands 22 transmit forces through tensile stresses.

According to the above mentioned it is formed an installation area 5 provided by removing or leaving out the roof covering 6 and battens 12 from the installation area 5, and possibly also the ventilation strips 9. The installation area 5 further comprises one or more elongated load-bearing support elements 18, 20 extending substantially in the direction of the battens 12 or transversal direction to the roof trusses 10 and attached to the roof trusses 10 for supporting and attaching the energy exchange unit 4 to the roof structure in the installation area 5. In the embodiment of figure 2 one or more upper load-bearing support elements 18 is provided to upper end of the installation area 5 and/or one or more lower load-bearing support elements 20 is provided to lower end of the installation area 5. Furthermore, one or more attachment bands 22 are attached to the roof trusses 10 in the installation area 5. The attachment bands 22 extend preferably substantially in the direction of the battens 12 or parallel to the battens 12 or in transversal direction to the roof trusses 10 for securing the roof trusses 10 to each other in the installation area 5. In one embodiment the attachment bands 22 extend parallel with the load-bearing support elements 18, 20 and in the space between the upper load-bearing support elements 18 and lower load-bearing support elements 20 and across the installation area 5. The energy exchange unit 4 is installed on the load-bearing support elements 18, 20 and also the attachment bands 22 such that the load-bearing support elements raise the bottom surface of the energy exchange unit 4 in substantially perpendicular direction to the roof surface above the bottom surface of the upper roof supports 12 in the installation area 5. In other words the load-bearing support elements 18, 20 place or position the energy exchange unit in the installation area such that the bottom surface of the energy exchange unit 4 is positioned below upper surface of the upper roof supports but on or upper side of the upper surface of the roof trusses of the roof. It should be understood that instead of or in addition to the load-bearing support elements 18, 20 also other support elements or spacer elements maybe provided to the installation area and on the roof trusses 10 or ventilation strips 9 for positioning the bottom surface of the energy exchange unit 4 below upper surface of the upper roof supports but on or upper side of the upper surface of the roof trusses of the roof. This may also be achieved by removing material from the existing upper roof supports 12 or replacing the upper roof supports with upper roof supports having lower height profile.

As shown in figure 2, the installation area 5 may also be provided with additional battens 14 provided adjacent to the battens 12 for reinforcing the installation area 5 and/or forming attachment locations for the energy exchange unit 4. Furthermore, one or more of the cut battens 12 may be provided with an attachment element 16 for attaching the side surface of the energy exchange unit 4 to the support structure of the roof 2. The attachment element 16 may be flange, bar, profile or the like.

In an alternative embodiment the energy exchange unit 4 is provided with one or more elongated load-bearing support elements 18, 20 before installing the energy exchange unit 4 to the installation area 5. This may be carried out by mounting one or more upper load-bearing support elements 18 to upper edge of the energy exchange unit 4 and/or one or more lower load-bearing support elements 20 to lower edge of the energy exchange unit 4. Thus the load-bearing support elements 18, 20 may be part of the energy exchange unit 4 and arranged to the installation area 4 together with the energy exchange unit 4. In similar manner the attachment bands 22 may be provided to the energy exchange unit 4 before installing it to the installation area 4.

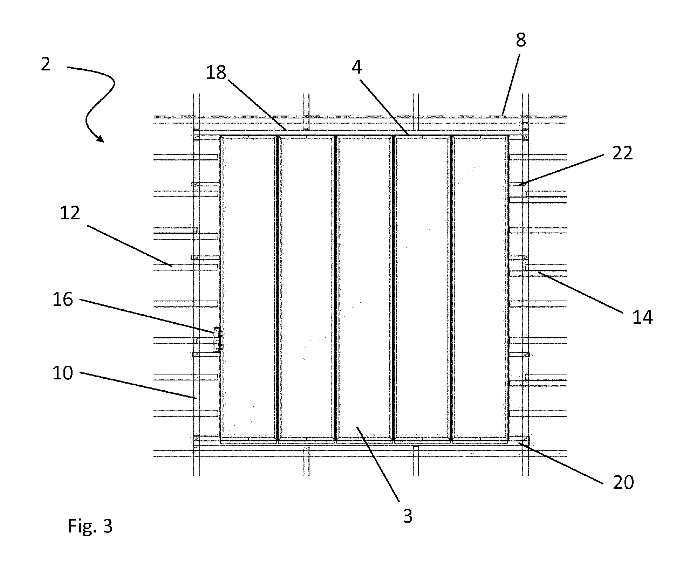

Figure 3 shows an energy exchange unit 4 installed to the installation area 5. The energy exchange unit 4 is supported on the roof trusses 10 such that the bottom surface 31 of the energy exchange unit 4 is positioned in vertical direction or substantially perpendicularly to the roof surface or covering 6 surface on height or area between upper surface of the roof trusses 10 of the roof 2 and below upper surface of the battens 12 of the roof 2 in the installation area 5, or alternatively on height or area between the upper surface of the roof trusses 10 of the roof 2 and bottom surface of the battens 12 of the roof 2 . The energy exchange unit 4 is attached to the installation area 4 with the load-bearing support elements 18, 22.

Figure 4 shows a front view of the installation area 5 with the energy exchange unit 4 integrated to the roof 2. As shown in figure 4 the energy exchange unit 4 is supported on the roof trusses 10 such that the bottom surface 31 of the energy exchange unit 4 is positioned in vertical direction or in substantially perpendicular direction to the roof surface or roof covering 6 surface between upper surface of the roof trusses 10 of the roof 2 and bottom surface of the battens 12 or upper roof supports 10 of the roof 2 in the installation area 5. The bottom surface of the energy exchange unit is substantially planar and remains in vertical direction between upper surface of the roof trusses 10 of the roof 2 and bottom surface of the battens 12 of the roof 2 in the installation area 5. Therefore there is no need for removing or altering the roof trusses 10 and the load-bearing capacity of the roof 2 is not compromised. In other words, the energy exchange element does not extend below the level defined by the upper surfaces of the roof trusses 10. The installation area 5 is preferably formed such that it starts from the ridge 8 of the roof 2 and extends towards the eave of the roof 2. This enables upper edge of the energy exchange unit 4 to be placed under the roof valley or other ridge covering (not shown), as shown in figure 5.

Figures 4 and 5 also show an embodiment in which support structure of the roof comprises ventilation strips 9 and roofing underlay 24. The ventilation strips 9 are removed from the installation area 4 and the energy exchange unit 4 is supported on the roof trusses 10 such that bottom surface 31 of the energy exchange unit 4 is positioned in vertical direction or between the upper surface of the roof trusses 10 of the roof 2 and upper surface of the ventilation strips 9 of the roof 2 in the installation area 5. Furthermore, the energy exchange unit 4 is supported on the roof trusses 10 such that bottom surface 31 of the energy exchange unit 4 is placed on upper side of the roofing underlay 24. This enables the energy exchange unit to be built-in deep in the roof 2 such that the upper surface of the energy exchange unit 4 is substantially on the same level or close to the level of the surface of the roof covering 6. As shown in figure 3, the method and arrangement of the present invention enables the energy exchange unit 4 to be located or positioned freely in longitudinal direction of the battens 12 or the ridge 8 or in transversal direction to the roof trusses 10 to a desired position in the installation area 5 or roof without restrictions by the roof trusses 10 or other parts of the support structure or the roof. The energy exchange unit 4 or energy exchange elements 3 forming the energy exchange unit 4 are preferably constructed or structured or formed as self-supporting units or elements such that the upper roof supports 12 extending between at least two adjacent roof trusses 10 may be omitted or removed. The self-supporting structure of the energy exchange unit 4 or energy exchange elements 3 may be provided with a support frame or with a support frame and a glass plate forming the top surface over the energy exchange element or unit and connected to the support frame. One embodiment of the self-supporting energy exchange unit and element is described below. Self-supporting energy exchange unit or elements may be installed to the installation area without need for additional support structures.

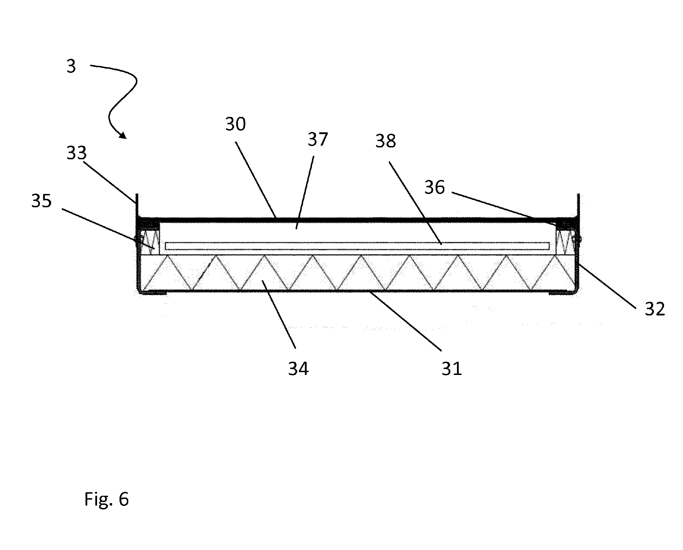

As shown in figures 3, 4 and 5 the energy exchange unit 4 may comprise two or more separate energy exchange elements 3 joined together such that the energy exchange unit 4 is provided with substantially uniform planar bottom surface. Figure 6 shows one type of energy exchange element 3 forming a solar heat collector 26. The energy exchange element 3 to be integrated on a roof 2 of a building 1 comprises a side edges, end edges, a top surface and a bottom surface. The element 3 further comprises an energy collector 38 for collecting energy from ambient atmosphere, an insulation 34 provided between the energy collector 38 and bottom surface and a frame structure 30, 31, 32. The frame structure comprises side frame parts 32 forming the side edges and a planar bottom plate 31 structurally connected to the side frame parts 32 and forming the bottom surface. The frame structure may further comprise a glass plate 30 or other top plate forming the top surface over the energy collector 38 and structurally connected to the side frame parts 32 for providing a self-supporting energy exchange element 3 with the side frame parts 32. The energy collector 38 is arranged to the inner space 37 of the element 3 and the inner space is further insulated from the side frame parts 32 with side insulation 35. The planar bottom plate 31 may be made of steel thin sheet, and the side frame parts 32 may be formed from steel thin sheet having a cross sectional C-profile, as shown in figure 6. Furthermore, at least one of the end edges of the energy exchange element may be provided with a longitudinal load-bearing support element 18, 20 having a cross sectional Z-profile or L-profile. In figures of the present application the energy exchange unit is a solar heat collector in which the energy collector 38 is fluid pipe having flowing heat exchange fluid which may be liquid or gas. It should however be noted that the energy exchange element 3 may be a solar heat collector element, photovoltaic cell element, or other kind of heat exchanger element. Also it may be possible that the heat exchange element does not receive or collect energy or heat, it can also operate conversely. For instance it may also emit heat energy for cooling purposes.

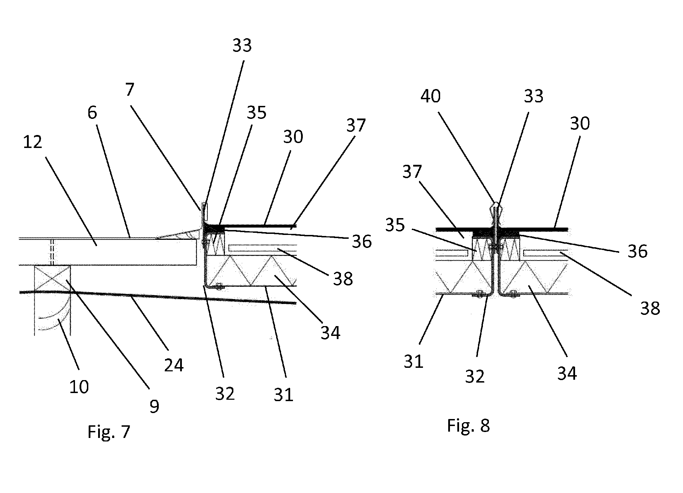

The energy exchange element 3 may further comprise side flange 33 attached or provided to the side surface of the element 3 such that it projects above the top surface of the element 3. The joint between the glass plate 30 and the side frame part 32 is sealed with a sealant 36. The adjacent energy exchange elements 3 are joined together with a waterproof joint. A waterproof joint may also be formed between the energy exchange unit 4 or an energy exchange element 4 and the roof covering 6. Figure 7 shows a detailed view of providing a waterproof side joint between the energy exchange unit 4 and the roof covering 6 in a standing seam roof. The roof covering is provided with a standing seam flange 7 arranged over the side flange 33 of the energy exchange element 3. Figure 8 furthermore shows a detailed view of providing a waterproof element joint between adjacent energy exchange elements 3 in an energy exchange unit 4. The element joint comprises seam cap 40 arranged over side flanges 33 of adjacent elements 3. The seam cap may be provide spring locking for attaching it to the adjacent side flanges 33. Therefore the energy exchange unit 4 may comprise two or more energy exchange elements 3 joined adjacently to each other with longitudinally element joints 33, 40 extending substantially in the direction of the roof trusses 10 or standing seams 7 of a roof 2. This way the integrated energy exchange unit with waterproof joints between adjacent energy exchange elements is provided. Accordingly the adjacent energy exchange elements 3 are joined together with a waterproof joint such that the bottom surfaces of the adjacent energy exchange elements 3 provide the energy exchange unit 4 with substantially uniform planar bottom surface. The waterproof joint between adjacent energy exchange elements 3 and the substantially planar uniform bottom surface of the energy exchange unit 4 are necessary requirements for integrating the energy exchange unit 4 to an installation area 5 according to the present invention. In the present invention the waterproof joint between the adjacent energy exchange elements 3 is preferably formed with the side flanges 33 such that the water proof joint is formed over the upper surface of the energy exchange unit 4 enabling the bottom surfaces of the energy exchange elements 3 to be arranged on the same level for providing a substantially planar uniform bottom surface for the energy exchange unit 4.

As shown in figures 1 and 4, the roof 2 may a standing steam roof made of steel sheets and comprising longitudinally extending standing seams 7 at predetermined intervals. The width of the energy exchange unit 4 or the energy exchange elements 3 of the energy exchange unit 4 is preferably multiple of the predetermined distance between the standing seams 7. Thus the element joints 33, 34 and the side joint 7, 33 may be aligned with the standing seams 7 of the roof 2. The energy exchange unit 4 and element 3 and the installation method and arrangement are advantageous as the energy exchange unit 4 and the elements 3 may be positioned according to the standing seams 7 or other roof covering features or otherwise to a desired location without restrictions defined by the support structure of the roof 2. The roof covering may further be provided with an edge profile for providing a interlock - joint between the roof covering 6 and the heat exchange unit 4. The edge profile may be formed as groove and the side flange 33 forms a tongue for providing a tongue and groove joint between the roof covering 6 and the heat exchange unit 4. The groove may further be formed such that there is snap-lock joint between the roof covering 6 and the heat exchange unit 4.

It will be obvious to a person skilled in the art that, as the technology advances, the inventive concept can be implemented in various ways. The invention and its embodiments are not limited to the examples described above but may vary within the scope of the claims.

## Claims

1. A method for installing energy exchange unit (4), having a top surface (30) and a bottom surface (31), to a roof (2) of a building (1), the roof (2) comprising a support structure comprising adjacent roof trusses (10) and upper roof supports (12) provided on the roof trusses (10) and extending between at least two adjacent roof trusses (10) for defining a roof surface,
the method comprising:
- forming an installation area (5) to the roof (2) for receiving the energy exchange unit (4); and
- installing the energy exchange unit (4) to the installation area (5) of the roof (2) such that the top surface (30) of the energy exchange unit (4) forms roof covering in the installation area (5),
**characterized in that**
- the forming of the installation area (5) comprises removing upper roof supports (12) from the installation area (5) or leaving the installation area (5) without the upper roof supports (12), and
- the installing of the energy exchange unit (4) comprises supporting the energy exchange unit (4) on the roof trusses (10) such that the bottom surface (31) of the energy exchange unit (4) is positioned in substantially perpendicular direction to the roof surface on height below upper surface of the upper roof supports (12) but on or upper side of upper surface of the roof trusses (10) in the installation area (5).

2. A method according to claim 1, **characterized in that** the installing of the energy exchange unit (4) comprises supporting the energy exchange unit (4) on the roof trusses (10) such that the bottom surface (31) of the energy exchange unit (4) is positioned in substantially perpendicular direction to the roof surface on height between upper surface of the roof trusses (10) of the roof (2) and bottom surface of the upper roof supports (12) of the roof (2) in the installation area (5).

3. A method according to claim 1 or 2, **characterized in that** the forming of the installation area (5) further comprises removing from the installation area (5) ventilation strips (9) extending on and along the upper surface of the roof trusses (10), or by leaving the installation area (5) without the ventilation strips (9), and that the installing of the energy exchange unit (4) comprises supporting the energy exchange unit (4) on the roof trusses (10) such that bottom surface (31) of the energy exchange unit (4) is positioned in vertical direction between the upper surface of the roof trusses (10) of the roof (2) and upper surface of the ventilation strips (9) of the roof (2) in the installation area (5).

4. A method according to claim 3, **characterized in that** the support structure further comprises a roofing underlay (24) provided under the roof covering (6) and installed between the roof trusses (10) and the ventilation strips (9), and that the method further comprises supporting the energy exchange unit (4) on the roof trusses (10) such that bottom surface (31) of the energy exchange unit (4) is placed on upper side of the roofing underlay (24).

5. A method according to any one of claims 1 to 4, **characterized in that** the forming of the installation area (5) comprises providing the installation area (5) with one or more elongated load-bearing support elements (18, 20) extending substantially in transversal direction to the roof trusses (10) for supporting and attaching the energy exchange unit (4) to the roof structure, or that the comprises providing the energy exchange unit (4) with one or more elongated load-bearing support elements (18, 20) before installing the energy exchange unit (4) to the installation area (5).

6. A method according to claim 5, **characterized by** mounting one or more upper load-bearing support elements (18) to upper end of the installation area (5) and one or more lower load-bearing support elements (20) is provided to lower end of the installation area (5), or mounting one or more upper load-bearing support elements (18) to upper edge of the energy exchange unit (4) and/or one or more lower load-bearing support elements (20) to lower edge of the energy exchange unit (4).

7. A method according to any one of claims 1 to 6, **characterized in that** the forming of the installation area (5) comprises providing the installation area (5) with one or more elongated attachment bands (22) extending in transversal direction to the roof trusses (10) and attached to the roof trusses (10) for securing the roof trusses (10) to each other in the installation area (5).

8. An installation arrangement for integrating an energy exchange unit (4) to a roof (2) of a building (1), the roof (2) comprising a support structure having adjacent roof trusses (10) and upper roof supports (12) provided on the roof trusses (10) and extending between at least two adjacent roof trusses (10) for defining a roof surface,
the installation arrangement comprising:
- an installation area (5) for the receiving the energy exchange unit (4); and
- the energy exchange unit (4) having a top surface (30) and a bottom surface (31), the energy exchange unit (4) being integrated to the roof (2) in the installation area (5) such that the energy exchange unit (4) forms the roof covering in the installation area (5),
**characterized in that** the installation area (5) is provided by removing the upper roof supports (12) from the installation area (5) or by leaving the installation area (5) without the upper roof supports (12), and that the energy exchange unit (4) is supported on the roof trusses (10) in the installation area (5) such that bottom surface (31) of the energy exchange unit (4) is positioned in substantially perpendicular direction to the roof surface on height below upper surface of the upper roof supports (12) but on or upper side of upper surface of the roof trusses (10) of the roof (2).

9. An arrangement according to the claim 8, **characterized in that** the energy exchange unit (4) is supported on the roof trusses (10) in the installation area (5) such that the bottom surface (31) of the energy exchange unit (4) is positioned in substantially perpendicular direction to the roof surface on height between upper surface of the roof trusses (10) of the roof (2) and bottom surface of the upper roof supports (12) of the roof (2) in the installation area (5).

10. An arrangement according to the claim 8 or 9, **characterized in that** support structure further comprises ventilation strips (9) extending on and along the upper surface of the roof trusses (10), and that the ventilation strips (9) are removed from the installation area (5) or the that he ventilation strips (9) are left out from the installation area (5), and that the energy exchange unit (4) is supported on the roof trusses (10) in the installation area such that bottom surface (31) of the energy exchange unit (4) is positioned in substantially perpendicular direction to roof surface between the upper surface of the roof trusses (10) of the roof (2) and upper surface of the ventilation strips (9) of the roof (2) in the installation area (5).

11. An arrangement according to any one of claims 8 to 10, **characterized in that** the support structure further comprises a roofing underlay (24) provided under the roof covering (6) and installed between the roof trusses (10) and the ventilation strips (9), and that the energy exchange unit (4) is supported on the roof trusses (10) such that bottom surface (31) of the energy exchange unit (4) is placed on upper side of the roofing underlay (24) in the installation area (5).

12. An arrangement according to any one of claims 8 to 11, **characterized in that** the arrangement further comprises one or more elongated load-bearing support elements (18, 20) extending substantially in transversal direction to the roof trusses (10) and attached to the roof trusses (10) for supporting and attaching the energy exchange unit (4) to the roof structure, or that one or more upper load-bearing support elements (18) is provided to upper end of the installation area (5) and/or one or more lower load-bearing support elements (20) is provided to lower end of the installation area (5), or that one or more upper load-bearing support elements (18) is provided to upper edge of the energy exchange unit (4) and/or one or more lower load-bearing support elements (20) is provided to lower edge of the energy exchange unit (4).

13. An arrangement according to any one of claims 9 to 12, **characterized in that** the arrangement comprises one or more attachment bands (22) attached to the roof trusses (10) in the installation area (5) and extending in transversal direction to the roof trusses (10) for securing the roof trusses (10) to each other in the installation area (5).

14. An arrangement according to any one of claims 8 to 13, **characterized in that** the energy exchange unit (4) comprises one or more energy exchange elements (3) having a self-supporting frame (30, 31, 32).

15. An arrangement according to any one of claims 8 to 14, **characterized in that** the energy exchange unit (4) comprises one or more energy exchange elements (3) having substantially planar bottom surface (31).

16. An arrangement according to any one of claims 8 to 15, **characterized in that** comprises two or more energy exchange elements (38) joined together for forming the energy exchange unit (4), the adjacent energy exchange elements (3) being joined together with a waterproof joint (33, 40) such that the bottom surfaces of the adjacent energy exchange elements (3) provide substantially uniform planar bottom surface for the energy exchange unit (4).

17. An arrangement according to any one of claims 8 to 16, **characterized in that** the energy exchange element (3) comprises a frame structure (30, 31, 32) provided with a glass plate (30) forming the top surface over the energy exchange element (38) providing a self-supporting energy exchange element (3).
